(19) Europäisches Patentamt
European Patent Office
Office européen des brevets

(11) EP 2 135 884 A1

# (12) EUROPEAN PATENT APPLICATION
published in accordance with Art. 153(4) EPC

(43) Date of publication:
**23.12.2009 Bulletin 2009/52**

(21) Application number: **08739616.4**

(22) Date of filing: **26.03.2008**

(51) Int Cl.:
***C08F 210/16*** *(2006.01)* ***C08F 4/658*** *(2006.01)*

(86) International application number:
**PCT/JP2008/056503**

(87) International publication number:
**WO 2008/123526 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.03.2007 JP 2007087283**

(71) Applicant: **Sumitomo Chemical Company, Limited**
**Tokyo 104-8260 (JP)**

(72) Inventor: **KUMAMOTO, Shin-ichi**
**Ichihara-shi**
**Chiba 299-0125 (JP)**

(74) Representative: **Hart-Davis, Jason et al**
**Cabinet Beau de Loménie**
**158, rue de l'Université**
**75340 Paris Cedex 07 (FR)**

## (54) SUPER HIGH MOLECULAR WEIGHT ETHYLENE-ALPHA-OLEFIN COPOLYMER POWDER

(57) Provided is an ultrahigh molecular weight ethylene-α-olefin copolymer powder having an intrinsic viscosity of 5 dl/g or more, a DSC melting point of 122°C or less, an apparent bulk density of 0.30 g/cm$^3$ or more, and a flow-down rate of 20 g/10 seconds or more. Also, provided is an ultrahigh molecular weight ethylene-α-olefin copolymer powder having an intrinsic viscosity of 5 dl/g or more, a DSC melting point of 122°C or less, a median diameter of 1 to 3000 μm, and a particle size distribution parameter (SPAN) of 3 or less.

EP 2 135 884 A1

## Description

### Technical Field

The present invention relates to an ultrahigh molecular weight ethylene-α-olefin copolymer powder having excellent powder properties and a low melting point.

### Background Art

Ultrahigh molecular weight polyethylenes are more excellent in properties such as strength, abrasion resistance, impact resistance, self-lubricating property, solvent resistance and electrical insulating property than those of general polyethylenes, and have been used in various uses utilizing these properties. As the ultrahigh molecular weight polyethylenes are highly crystalline polyethylenes having a relatively high density, they have high melting points and low transparency. In order to improve these defects, for example, Japanese Examined Patent Publication No. 5-86803 describes ultrahigh molecular weight ethylene-α-olefin copolymers produced by copolymerization of ethylene with an α-olefin as a co-monomer.

### Disclosure of the Invention

The ultrahigh molecular weight ethylene-α-olefin copolymers described in Japanese Examined Patent Publication No. 5-86803, however, have wide composition distributions, and therefore, there are some problems such that even if the content of the co-monomer, the α-olefin is increased, the melting point does not satisfactorily decreases, or as a result of increasing the content of the α-olefin units, extracts are remarkably increased or mechanical strength is decreased, and the transparency does not be satisfactory.

In addition, because the ultrahigh molecular weight polyethylenes have a remarkably higher melt viscosity than general polyethylenes and poor mold-processability, they often molded in a state of powder. From this reason, ultrahigh molecular weight polyethylenes having excellent powder properties such as high bulk density and high flowability have been demanded.

Under the circumstance, the problem to be solved by the present invention, namely, an object of the invention is to provide an ultrahigh molecular weight ethylene-α-olefin copolymer powder having excellent powder properties and a low melting point.

The present invention relates to an ultrahigh molecular weight ethylene-α-olefin copolymer powder having an intrinsic viscosity of 5 dl/g or more, a DSC melting point of 122°C or less, an apparent bulk density of 0.30 g/cm$^3$ or more, and a flow-down rate of 20 g/10 seconds or more.

Also, the present invention relates to an ultrahigh molecular weight ethylene-α-olefin copolymer powder having an intrinsic viscosity of 5 dl/g or more, a DSC melting point of 122°C or less, a median diameter of 1 to 3000 μm, and a particle size distribution parameter (SPAN) of 3 or less.

According to the present invention, an ultrahigh molecular weight ethylene-α-olefin copolymer powder having excellent powder properties and a low melting point is provided.

### Brief Description of Drawing

Fig. 1 is a schematic view showing a cylindrical reactor.

### Explanations of letters and numerals

(a): a top view, (b): a side view, 1: stirring blades, 2: baffle plates

### Best Mode for Carrying Out the Invention

Next, the present invention is specifically described. The ultrahigh molecular weight ethylene-α-olefin copolymer of the present invention has an intrinsic viscosity, measured in decalin at 135°C, of 5 dl/g or more. It is preferably from 7 to 35 dl/g, more preferably from 10 to 30 dl/g, further more preferably from 12 to 25 dl/g. When the intrinsic viscosity is too small, the strength necessary for using various molded articles from the ultrahigh molecular weight ethylene-α-olefin copolymer sometimes cannot be obtained, and when it is too large, the processability, etc. upon molding is sometimes worsen.

The ultrahigh molecular weight ethylene-α-olefin copolymer of the present invention has a melting point (Tm), measured by using a differential scanning calorimeter (DSC), of 122°C or less. It is preferably from 112 to 121°C, more preferably from 113°C to 120°C. The higher the α-olefin content in the copolymer is, the lower the melting point tends to become.

The ultrahigh molecular weight ethylene-α-olefin copolymer powder of the present invention has an apparent bulk density of 0.30 $g/cm^3$ or more. It is preferably from 0.35 to 0.55 $g/cm^3$, more preferably from 0.38 to 0.53 $g/cm^3$, further more preferably from 0.39 to 0.52 $g/cm^3$. In general, when the apparent bulk density is higher, the flowability of the powder is better and so the handling is easier, and the powder is easily dried, and can be stored in a smaller space.

The ultrahigh molecular weight ethylene-α-olefin copolymer powder of the present invention has a flow-down rate of 20 g/10 seconds or more. It is preferably from 21 to 200 g/10 seconds, and more preferably from 22 to 100 g/10 seconds.

In the present invention, for expressing the flow-down rate, a weight of powder flowing down from a cone per unit time is used, when the powder is charged in a cone which is used for measuring an apparent bulk density of powder according to JIS K-6721 (1966), and the powder constantly flows down from the bottom part of the cone. The higher the flow-down rate is, the better the flowability of the powder is. When the flow-down rate is extremely low, the powder sometimes cannot flow down constantly from the cone.

The ultrahigh molecular weight ethylene-α-olefin copolymer powder of the present invention has a median diameter of 1 to 3000 μm. It is preferably from 25 to 2000 μm, more preferably from 50 to 1500 μm, and further more preferably from 80 to 1000 μm.

The ultrahigh molecular weight ethylene-α-olefin copolymer powder of the present invention has a particle size distribution parameter (SPAN) of 3 or less. It is preferably from 0.1 to 2.5, more preferably from 0.2 to 2.0, further more preferably from 0.3 to 1.0. The SPAN is expressed by the following equation, and the smaller the value is, the narrower the particle size distribution is.

$$SPAN = (d90 - d10)/d50$$

wherein d90, d10 and d50 are particle sizes at 90%, 10% and 50% in a volume cumulative distribution, respectively, and d50 is a median diameter.

The ultrahigh molecular weight ethylene-α-olefin copolymer of the present invention preferably has a degree of short chain branching (SCB) of 25 or less. It is more preferably from 0.5 to 20, further more preferably from 1 to 15, particularly preferably from 3 to 12. The degree of short chain branching is related to a content of α-olefin monomer units in the copolymer. It is preferable that the degree of short chain branching is not too small, so that the melting point measured according to DSC is satisfactorily lowered. Also, it is preferable that the degree of short chain branching is not too large, so that the apparent bulk density of the powder is not lowered by increased adhesion caused by an increase of the side chain derived from the α-olefin monomer units.

The ultrahigh molecular weight ethylene-α-olefin copolymer of the present invention preferably has a small amount of cold xylene soluble (CXS) parts. The amount is more preferably 10% by weight or less, further more preferably from 0.1 to 5% by weight, particularly preferably from 0.2 to 3% by weight. The CXS parts of the copolymer of the invention are low molecular weight components having a high content of the α-olefin. The higher the α-olefin content of the copolymer, the more CXS parts tend to increase, and therefore, it is preferable that the α-olefin content is small for ensuring the strength of the copolymer.

It is preferable that the melting point (Tm) measured by using a differential scanning calorimeter and the cold xylene soluble (CXS) parts of the ultrahigh molecular weight ethylene-α-olefin copolymer of the present invention meet the following relation:

$$CXS \leq 0.8\times(6\times10^{66}\times(Tm)^{-31.7}).$$

It is more preferable to meet the following relation:

$$CXS \leq 0.6\times(6\times10^{66}\times(Tm)^{-31.7}),$$

and

further more preferable to meet the following relation:

$$CXS \leq 0.4\times(6\times10^{66}\times(Tm)^{-31.7}).$$

In usual, in order to lower a melting point (Tm), a content of α-olefin monomer units in a copolymer is made higher, but when the difference in the α-olefin monomer content between the molecular chains of the copolymer is large, in other words, when the composition distribution is wide, the cold xylene soluble (CXS) parts having a high content of the α-olefin monomer units are remarkably increased, which leads to poor transparency and strength of the molded article.

The ultrahigh molecular weight ethylene-α-olefin copolymer of the present invention has a density of preferably 0.88 to 0.94 g/ $cm^3$, more preferably 0.885 to 0.93 g/ $cm^3$, and further more preferably 0.89 to 0.92 $g/cm^3$.

The ultrahigh molecular weight ethylene-α-olefin copolymer of the present invention can be produced using any polymerization catalyst having a satisfactorily high polymerization activity. When the polymerization is performed using a polymerization catalyst having titanium atoms, the content of the titanium atoms is preferably 5 ppm by weight or less, more preferably 3 ppm by weight or less, and further more preferably 1 ppm by weight or less.

When the polymerization is performed using a polymerization catalyst including aluminum atoms, the content of the aluminum atoms is preferably 3000 ppm by weight or less, more preferably 1500 ppm by weight or less, and further more preferably 750 ppm by weight or less.

It is preferable that the content of the metal component derived from the catalyst residue is smaller, according to the application. As means for lowering the content of the metal components, it is possible to wash the powder with a suitable solvent, a treating agent, or the like.

The ultrahigh molecular weight ethylene-α-olefin copolymer powder of the present invention can be produced using, for example, a titanium/magnesium combined Ziegler catalyst system, or a metal complex supported catalyst system such as metallocene, and it is preferable to use the titanium /magnesium combined Ziegler catalyst system, in a viewpoint of obtaining ethylene-α-olefin copolymers having a higher molecular weight. As the apparent bulk density, the particle size and the particle size distribution of the powder of the present invention are largely affected by the shape, the particle size, and the particle size distribution of a polymerization catalyst component used, it is preferable to appropriately prepare the powder of the present invention.

More specifically, the powder can be prepared by copolymerizing ethylene and an α-olefin in the presence of a product obtained by contacting at least

(A) a titanium /magnesium combined solid catalyst component, and
(B) an organic aluminum compound.

It is preferable to use a solid catalyst component composed of various ingredients such as titanium, magnesium, halogens and electron donors as the titanium/magnesium combined catalyst component (A).

For example, it is possible to use a solid catalyst component containing titanium, magnesium, a halogen and an ester compound, and having a specific surface area according to a BET method of 80 $m^2/g$ or less, as the solid catalyst component (A).

Also, it is possible to make a solid catalyst component suitable for producing the copolymer of the present invention by containing the ester compound in an amount sufficient for providing the solid catalyst component (A) with a satisfactorily small specific surface area.

The solid catalyst component has a specific surface area according to a BET method of preferably 80 $m^2/g$ or less, more preferably 0.05 to 50 $m^2/g$, and further more preferably 0.1 to 30 $m^2/g$.

The solid catalyst component has a content of the ester compound of preferably 15 to 50% by weight, more preferably 20 to 40% by weight, and further more preferably 22 to 35% by weight when the dried solid catalyst component is assumed to be 100% by weight.

The ester compound in the solid catalyst component may include esters of mono or polyvalent carboxylic acids. Examples thereof include saturated aliphatic carboxylates, unsaturated aliphatic carboxylates, alicyclic carboxylates and aromatic carboxylates. Examples thereof include methyl acetate, ethyl acetate, phenyl acetate, methyl propionate, ethyl propionate, ethyl butyrate, ethyl valerate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimetyl maleate, dibutyl maleate, dietyl itaconate, dibutyl itaconate, monoethyl phthalate, dimethyl phthalate, methyl ethyl phthalate, diethyl phthalate, di-n-propyl phthalate, diisopropyl phthalate, di-n-butyl phthalate, diisobutyl phthalate, dipentyl phthalate, di-n-hexyl phthalate, diheptyl phthalate, di-n-octyl phthalate, di(2-ethyl hexyl) phthalate, diisodecyl phthalate, dicyclohexyl phthalate, diphenyl phthalate, and the like. Of these, dialkyl esters of phthalic acid are preferable, and dialkyl esters of phthalic acid in which the dialkyl part has 9 or more total carbon atoms are more preferable from the viewpoint

of polymerization activity.

The solid catalyst component has a content of titanium atoms of preferably 0.6 to 1.6% by weight, and more preferably 0.8 to 1.4% by weight when the dried solid catalyst component is assumed to be 100% by weight.

The solid catalyst component (A) can be obtained in a preparation procedure of a solid catalyst component, described in, for example, Japanese Examined Patent Publications No. 46-34092, No. 47-41676, No. 55-23561, No. 57-24361, No. 52-39431, No. 52-36786, No. 1-28049 and No. 3-43283, and Japanese Patent Application Laid-Open Publications No. 4-80044, No. 55-52309, No. 58-21405, No. 61-181807, No. 63-142008, No. 5-339319, No. 54-148093, No. 4-227604, No. 6-2933, No. 64-6006, No. 6-179720, No. 7-116252, No. 8-134124, No. 9-31119, No. 11-228628, No. 11-80234 and No. 11-322833, in which an ester compound or a compound capable of producing an ester compound during the reaction system is coexisted.

As methods for producing a solid catalyst component, the following methods (1) to (5) can be particularly exemplified.

(1) A method in which a halogenated magnesium compound, a titanium compound and an ester compound are brought into contact.
(2) A method in which a solid component, which is obtained by bringing a solution of a halogenated magnesium compound in an alcohol into contact with a titanium compound, is brought into contact with an ester compound.
(3) A method in which a solid component, which is obtained by bringing a solution of a halogenated magnesium compound and a titanium compound into contact with a depositing agent, is brought into contact with a halogenated compound and an ester compound.
(4) A method in which a dialkoxymagnesium compound, a halogenated titanium compound and an ester compound are brought into contact.
(5) A method in which a solid component containing a magnesium atom, a titanium atom and a hydrocarbyloxy group, a halogenated compound, and an ester compound are brought into conatact.

Of these, the method (5) is preferable, and a method in which a solid component (a) containing a magnesium atom, a titanium atom and a hydrocarbyloxy group, a halogenated compound (b), and a phthalic acid derivative (c) are brought into contact is also preferable. More detailed explanation is below.

(a) Solid Component

The solid component (a) is a solid component obtained by reducing a titanium compound (ii) represented by the following formula [I] with an organic magnesium compound (iii) in the presence of an organic silicon compound (i) having a Si-O bond(s). In this case, when an ester compound (iv) coexists as an optional component, the polymerization activity sometimes may be further increased.

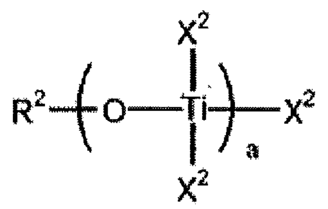

[ I ]

wherein a is a number of 1 to 20, $R^2$ is a hydrocarbon group having 1 to 20 carbon atoms, $X^2$ is a halogen atom or a hydrocarbonoxy group having 1 to 20 carbon atoms, and all $X^2$ groups may be the same or different.

The organic silicon compound (i) having a Si-O bond(s) includes the compounds represented by the following formulas:

$Si(OR^{10})_tR^{11}_{4-t}$,

$R^{12}(R^{13}_2SiO)_uSiR^{14}_3$,

or

$(R^{15}_2SiO)_v$

wherein $R^{10}$ is a hydrocarbon group having 1 to 20 carbon atoms, $R^{11}$, $R^{12}$, $R^{13}$, $R^{14}$and $R^{15}$ are each independently a hydrocarbon group having 1 to 20 carbon atoms or hydrogen atom, t is an integer satisfying $0<t\leq 4$, u is an integer of 1 to 1000, and v is an integer of 2 to 1000.

Examples of the organic silicon compound (i) may include tetramethoxysilane, dimethyldimethoxysilane, tetraethoxysilane, triethoxyethylsilane, diethoxydiethylsilane, ethoxytriethylsilane, tetraisopropoxysilane, diisopropoxydiisopropylsilane, tetrapropoxysilane, dipropoxydipropylsilane, tetrabutoxysilane, dibutoxydibutylsilane, dicyclopentoxydiethylsilane, diethoxydiphenylsilane, cyclohexyloxytrimetylsilane, phenoxytrimetylsilane, tetraphenoxysilane, triethoxyphenylsilane, hexamethyldisiloxane, hexaethyldisiloxane, hexapropyldisiloxane, octaethyltrisiloxane, dimethyl polysiloxane, diphenyl polysiloxane, methylhydropolysiloxane, phenylhydropolysiloxane, and the like.

Of these organic silicon compounds (i), alkoxysilane compounds represented by the general formula: $Si(OR^{10})_tR^{11}_{4-t}$ are preferable, wherein t is preferably a number satisfying $1\leq t\leq 4$, and tetraalkoxysilanes having the above formula wherein t=4 are particularly preferable, and tetraethoxysilane is most preferable.

The titanium compound (ii) is a titanium compound represented by the following formula [I]:

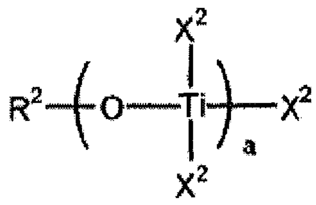

[ I ]

wherein a is a number of 1 to 20, $R^2$ is a hydrocarbon group having 1 to 20 carbon atoms, $X^2$ is a halogen atom or a hydrocarbonoxy group having 1 to 20 carbon atoms, and all $X^2$ groups may be the same or different.

Examples of $R^2$ include alkyl groups such as methyl group, ethyl group, propyl group, isopropyl group, butyl group, isobutyl group, amyl group, isoamyl group, hexyl group, heptyl group, octyl group, decyl group and dodecyl group; aryl groups such as phenyl group, cresyl group, xylyl group and naphthyl group; cycloalkyl groups such as cyclohexyl group and cyclopentyl group; allyl groups such as propenyl group; aralkyl groups such as benzyl group, and the like.

Of these hydrocarbon groups, alkyl groups having 2 to 18 carbon atoms and aryl groups having 6 to 18 carbon atoms are preferable, and linear alkyl groups having 2 to 18 carbon atoms are particularly preferable.

The halogen atom in $X^2$ may include a chlorine atom, a bromine atom and an iodine atom. A chlorine atom is particularly preferable. The hydrocarbonoxy group having 1 to 20 carbon atoms in $X^2$ is a hydrocarbonoxy group containing a hydrocarbon group having 1 to 20 carbon atoms as in $R^2$. Alkoxy groups having a linear alkyl group with 2 to 18 carbon atoms are particularly preferable as $X^2$.

The letter a in the titanium compound (ii) represented by the above formula [I] is a number of 1 to 20, and preferably a number satisfying $1\leq a\leq 5$.

Examples of the titanium compound (ii) include tetramethoxytitanium, tetraethoxytitanium, tetra-n-propoxytitanium, tetra-isopropoxytitanium, tetra-n-butoxytitanium, tetra-isobutoxytitanium, n-butoxytitanium trichloride, di-n-butoxytitanium dichloride, tri-n-butoxytitanium chloride, di-n-tetraisopropyl polytitanate (mixtures of compounds wherein a is within a range of 2 to 10), tetra-n-butyl polytitanate (mixtures of compounds wherein a is within a range of 2 to 10), tetra-n-hexyl polytitanate (mixtures of compounds wherein a is within a range of 2 to 10), and tetra-n-octyl polytitanate (mixtures of compounds wherein a is within a range of 2 to 10). In addition, tetraalkoxytitanium condensates, which were obtained by reacting a tetraalkoxytitanium with a small amount of water, can be exemplified.

The titanium compounds represented by the above formula [I] wherein a is 1, 2 or 4 are preferable as the titanium compound (ii).

Tetra-n-butoxytitanium, tetra-n-butyl titanium dimer, and tetra-n-butyl titanium tetramer are particularly preferable.

The titanium compounds (ii) may be used alone, or can be used in a state of a mixture of multiple kinds.

The organic magnesium compound (iii) is any type of an organic magnesium compound having a magnesium-carbon bond. In particular, Grignard compounds represented by the formula: $R^{16}MgX^5$ wherein Mg is a magnesium atom, $R^{16}$ is a hydrocarbon group having 1 to 20 carbon atoms, and $X^5$ is a halogen atom, and dihydrocarbyl magnesiums represented by the general formula: $R^{17}R^{18}Mg$ wherein Mg is a magnesium atom, and each of $R^{17}$ and $R^{18}$ is a hydrocarbon group having 1 to 20 carbon atoms are preferably used. Here, $R^{17}$ and $R^{18}$ may be the same or different. Examples of each of $R^{16}$ to $R^{18}$ include alkyl groups, aryl groups, aralkyl groups and alkenyl groups having 1 to 20 carbon atoms such as methyl group, ethyl group, propyl group, isopropyl group, butyl group, sec-butyl group, tert-butyl group, isoamyl group, hexyl group, octyl group, 2-ethylhexyl group, phenyl group and benzyl group. It is particularly preferable that the Grignard compound represented by $R^{16}MgX^5$ is used in an ether solution, from the viewpoints of polymerization activity

and stereoregularity.

The organic magnesium compound (iii) as described above can be used in a state of a complex with another organic metal compound, in order to solubilize it in a hydrocarbon solvent. Examples of the organic metal compound include compounds of lithium, beryllium, aluminum or zinc.

The ester compound (iv) includes mono or polyvalent carboxylic esters, and examples thereof include saturated aliphatic carboxylic esters, unsaturated aliphatic carboxylic esters, alicyclic carboxylic esters, and aromatic carboxylic esters. Specific exmaples include methyl acetate, ethyl acetate, phenyl acetate, methyl propionate, ethyl propionate, ethyl butyrate, ethyl valerate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethyl maleate, dibutyl maleate, diethyl itaconate, dibutyl itaconate, monoethyl phthalate, dimethyl phthalate, methylethyl phthalate, diethyl phthalate, di-n-propyl phthalate, diisopropyl phthalate, di-n-butyl phthalate, diisobutyl phthalate, dipentyl phthalate, di-n-hexyl phthalate, diheptyl phthalate, di-n-octyl phthalate, di(2-ethylhexyl)phthalate, diisodecyl phthalate, dicyclohexyl phthalate, diphenyl phthalate, and the like.

Of these ester compounds, unsaturated aliphatic carboxylic esters such as methacrylic esters and maleic esters, aromatic carboxylic esters such as phthalic esters are preferable, and dialkyl esters of phthalatic acid are particularly preferably used.

The solid component (a) is obtained by reducing the titanium compound (ii) with the organic magnesium compound (iii) in the presence of the organic silicon compound (i), or in the presence of the organic silicon compound (i) and the ester compound (iv). Specifically, a method in which the organic magnesium compound (iii) is added to a mixture of the organic silicon compound (i), the titanium compound (ii) and, if necessary, the ester compound (iv) is preferable.

It is preferable to use the titanium compound (ii), the organic silicon compound (i) and the ester compound (iv) by dissolving in a suitable solvent or in a state of a slurry.

The solvent includes aliphatic hydrocarbons such as hexane, heptane, octane, and decane; aromatic hydrocarbons such as toluene and xylene; alicyclic hydrocarbons such as cyclohexane, methyl cyclohexane, and decalin; ether compounds such as diethyl ether, dibutyl ether, diisoamyl ether, and tetrahydrofuran.

The organic magnesium (iii) is added usually for about 30 minutes to 20 hours, preferably 2 to 10 hours, more preferably 3 to 8 hours. When the addition time is shorter, the shape of the catalyst can become deformed and the particle size distribution sometimes can be made wider. The reduction reaction proceeds as the organic magnesium (iii) is added, and a post-reaction may be further performed at a temperature of 20 to 120°C, after the completion of the addition.

It is also possible that the reduction reaction is performed in the coexistence of a porous carrier such as an inorganic oxide or an organic polymer to impregnate the porous carrier with the solid component. Known porous carriers may be used as the porous carrier. Speicfic examples thereof may include porous inorganic oxides such as $SiO_2$, $Al_2O_3$, MgO, $TiO_2$, and $ZrO_2$; and organic porous polymers such as polystyrene, a styrene-divinyl benzene copolymer, a styrene-ethyleneglycol-methyl dimethacrylate copolymer, methyl polyacrylate, ethyl polyacrylate, a methyl acrylate-divinyl benzene copolymer, methyl polymethacrylate, a methyl methacrylate-divinyl benzene copolymer, polyacrylonitrile, an acrylonitrile-divinyl benzene copolymer, polyvinyl chloride, polyethylene, and polypropylene. Of these, the organic porous polymers are preferably used, and a styrene-divinyl benzene copolymer and an acrylonitrile-divinyl benzene copolymer are particularly preferable.

The porous carrier has a pore volume, at a pore radius of 20 nm to 200 nm, of preferably 0.3 $cm^3/g$ or more, more preferably 0.4 $cm^3/g$ or more, and the pore volume at this pore radius range is preferably 35% or more, more preferably 40% or more of a pore volume at a pore radius of 3.5 nm to 7500 nm. Small pore volumes of the porous carrier are not preferable, because there is a case where the catalyst component cannot be effectively fixed. Also, even if the pore volume of the porous carrier is 0.3 $cm^3/g$ or more, as long as the porous carrier is not satisfactorily pesent in the range of the pore radius of 20 nm to 200 nm, the catalyst component sometimes cannot be effectively fixed, thus being undesirable.

The amount of the organic silicon compound (i) used is in a ratio of the number of the silicon atoms to the total number of titanium atoms in the titanium compound (ii), Si/Ti, of usually 1 to 500, preferably 1.5 to 300, and particularly preferably from 3 to 100.

Furthermore, the amount of the organic magnesium compound (iii) used is in a ratio of the total number of titanium atoms and the silicon atoms to the number of magnesium atoms, (Ti+Si)/Mg, of usually 0.1 to 10, preferably 0.2 to 5.0, and particularly preferably 0.5 to 2.0.

In addition, the amounts of the titanium compound (ii), the organic silicon compound (i), and the organic magnesium compound (iii), which are used, are determined so that a molar ratio of Mg/Ti in the solid catalyst component is within a range of usually 1 to 51, preferably 2 to 31, and particularly preferably 4 to 26.

Also, the optional component, the ester compound (iv), used is in a molar ratio of the ester compound to titanium atoms in the titanium compound (ii), the ester compound/Ti, of usually 0.05 to 100, preferably 0.1 to 60, and particularly particularly 0.2 to 30.

In order to obtain a solid catalyst component having an excellent particle shape and particle size distribution

for producing the ultrahigh molecular weight ethylene-α-olefin copolymer powder having excellent powder properties, it is preferable to prepare the solid component in an appropriate stirring efficiency.

When the stirring efficiency is expressed as a power factor of stirring per unit volume (P/V) expressed by the equation (1), the reduction reaction upon the production of the solid component is performed under a condition of usually P/V=0.03 to 350 $m^2/s^3$, preferably P/V=0.2 to 250 $m^2/s^3$, and more preferably P/V=0.5 to 150 $m^2/s^3$.

$$P/V = Np \times (n^3) \times (d^5) \div V \qquad (1)$$

wherein Np is a power number [-], n is a number of rotations [rps], d is a diameter of a stirring blade [m], V is a volume of a reaction solution [$m^3$], and P/V is a power factor of stirring per unit volume [$m^2/s^3$]. The power number of the reactor can be found by calculating from Nagata's formula on page 896 in Kako Binran (Chemical Engineering Handbook), the fifth edition, or from a consumed electric power of a motor used in stirring, and the volume of the reaction solution V is, in the above case, a total volume of the organic silicon compound (i), the titanium compound (ii), the ester compound (iv) (optional component) and the solvent at the time when the reduction reaction is started.

When stirring efficiency is too low, large particles are produced and sometimes the particle size distribution becomes wide, and when it is too high, fine particles are sometimes produced.

In order to obtain the stirring efficiency as described above, the amount of the solvent is selected so that a ratio of ((i)+(ii)+(iv))/((i)+(ii)+(iv)+the solvent) is usually from 0.15 to 0.7 ml/ml, and preferably from 0.2 to 0.5 ml/ml.

The temperature of the reduction reaction is within a temperature range of usually -50 to 100°C, preferably -30 to 70°C, and particularly preferably 0 to 60°C.

The solid component obtained by the reduction reaction is usually subjected to solid-liquid separation, and washed with an inert hydrocarbon solvent such as hexane, heptane or toluene several times.

The thus obtained solid component (a) contains trivalent titanium atoms, magnesium atoms and hydrocarbyloxy groups, and generally shows amorphousness or very week crystallinity. The amorphous structures are preferable from the viewpoint of polymerization activity.

(b) Halogenated Compound

As the halogenated compound, compounds capable of substituting the hydrocarbonoxy group in the solid component (a) by a halogen atom are preferable. Of these, halogen compounds of Group IV element, halogen compounds of Group XIII element, and halogen compounds of Group XIV element are preferable, and the (b1) halogen compounds of Group IV element and (b2) halogen compounds of Group XIV are more preferable.

Halogen compounds represented by the general formula:

$$M^1(OR^9)_bX^4_{4-b}$$

wherein $M^1$ is a Group IV element, $R^9$ is a hydrocarbon group having 1 to 20 carbon atoms, $X^4$ is a halogen atom, and b is a number satisfying $0 \le b < 4$ are preferable as the (b1) halogen compound of Group IV element. Examples of $M^1$ include a titanium atom, a zirconium atom, and a hafnium atom, and a titanium atom is preferable among them. Examples of $R^9$ include alkyl groups such as methyl group, ethyl group, propyl group, isopropyl group, butyl group, isobutyl group, tert-butyl group, amyl group, isoamyl group, tert-amyl group, hexyl group, heptyl group, octyl group, decyl group, and dodecyl group; aryl groups such as phenyl group, cresyl group, xylyl group, and naphthyl group; allyl groups such as propenyl group; aralkyl groups such as benzyl group and the like. Of these, alkyl groups having 2 to 18 carbon atoms, and aryl groups having 6 to 18 carbon atoms are preferable. Linear alkyl groups having 2 to 18 carbon atoms are particularly preferable. It is possible to use halogen compounds of Group IV element having two or more different kinds of $OR^9$ groups.

The halogen atom represented by $X^4$ may include a chlorine atom, a bromine atom, and an iodine atom. Of these, a chlorine atom gives particularly preferable results.

In the halogen compound of Group IV element represented by the general formula: $M^1(OR^9)_bX^4_{4-b}$, b is a number satisfying $0 \le b < 4$, preferably a number satisfying $0 \le b \le 2$, and particularly preferably a number satisfying b=0.

Specific exmaples of the halogen compound represented by the general formula: $M^1(OR^9)_bX^4_{4-b}$ include tetrahalogenated titaniums such as titanium tetrachloride, titanium tetrabromide, and titanium tetraiodide; trihalogenated alkoxytitaniums such as methoxytitanium trichloride, ethoxytitanium trichloride, butoxytitanium trichloride, phenoxytitanium trichloride, and ethoxytitanium tribromide; dihalogenated dialkoxytitaniums such as dimethoxytitanium dichloride, diethoxytitanium dichloride, dibutoxytitanium dichloride, diphenoxytitanium dichloride, and diethoxytitanium dibromide, and also zirconium compounds and hafnium compounds corresponding to each compound described above can be

exemplified. Titanium tetrachloride is most preferable.

As the halogen compound of Group XIII element and the (b2) halogen compound of Group XIV element, compounds represented by the general formula: $M^2R^1_{m-c}X^8_c$ wherein $M^2$ is a Group XIII atom or a Group XIV atom, $R^1$ is a hydrocarbon group having 1 to 20 carbon atoms, $X^8$ is a halogen atom, m is a number corresponding to an atomic valence of $M^2$, and c is a number satisfying $0<c\leq m$ are preferable.

The Group XIII atoms herein include a boron atom, an aluminum atom, a gallium atom, an indium atom, and a thallium atom. A boron atom and an aluminum atom are preferable, and an aluminum atom is more preferable. The Group XIV atoms include a carbon atom, a silicon atom, a germanium atom, a tin atom, and a lead atom. A silicon atom, a germanium atom and a tin atom are preferable, and a silicon atom and a tin atom are more preferable.

The letter m shows a number corresponding to an atomic valence of $M^2$, and for example, when $M^2$ is a silicon atom, m is 4.

The letter c shows a number satisfying $0<c\leq m$, and when $M^2$ is a silicon atom, c is preferably 3 or 4.

The halogen atom represented by $X^8$ includes a fluorine atom, a chlorine atom, a bromine atom and an iodine atom, and a chlorine atom is preferable.

Examples of $R^1$ include alkyl groups such as methyl group, ethyl group, normal propyl group, isopropyl group, normal butyl group, isobutyl group, amyl group, isoamyl group, hexyl group, heptyl group, octyl group, decyl group and dodecyl group; aryl groups such as phenyl group, tolyl group, cresyl group, xylyl group and naphthylgroup; cycloalkyl groups such as cyclohexyl group and cyclopentyl group; alkenyl groups such as propenyl group; aralkyl groups such as benzyl group, and the like. Preferable $R^1$ is alkyl group or aryl group, and particularly preferable $R^1$ is methyl group, ethyl group, normal propyl group, phenyl group or para-tolyl group.

The halogen compound of Group XIII element specifically includes trichloroborane, methyl dichloroborane, ethyl dichloroborane, phenyl dichloroborane, cyclohexyl dichloroborane, dimethyl chloroborane, methylethyl chloroborane, trichloroaluminum, methyl dichloroaluminum, ethyl dichloroaluminum, phenyl dichloroaluminum, cyclohexyl dichloroaluminum, dimethyl chloroaluminum, diethyl chloroaluminum, methylethyl chloroaluminum, ethyl aluminum sesquichloride, gallium chloride, gallium dichloride, trichlorogallium, methyl dichlorogallium, ethyl dichlorogallium, phenyl dichlorogallium, cyclohexyl dichlorogallium, dimethyl chlorogallium, methylethyl chlorogallium, indium chloride, indium trichloride, methyl indium dichloride, phenyl indium dichloride, dimethyl indium chloride, thallium chloride, thallium trichloride, methyl thallium dichloride, phenyl thallium dichloride, dimethyl thallium chloride, and the like, and compounds wherein the chloro parts in these compound names are replaced by fluoro, bromo, or iodo can be also exemplified.

The (b2) halogen compound of Group XIV element specifically includes tetrachloromethane, trichloromethane, dichloromethane, monochloromethane, 1,1,1-trichloroethane, 1,1-dichloroethane, 1,2-dichloroethane, 1,1,2,2-tetrachloroethane, tetrachlorosilane, trichlorosilane, methyl trichlorosilane, ethyl trichlorosilane, normal propyl trichlorosilane, normal butyl trichlorosilane, phenyl trichlorosilane, benzyl trichlorosilane, para-tolyl trichlorosilane, cyclohexyl trichlorosilane, dichlorosilane, methyl dichlorosilane, ethyl dichlorosilane, dimethyl dichlorosilane, diphenyl dichlorosilane, methylethyl dichlorosilane, monochlorosilane, trimetyl chlorosilane, triphenyl chlorosilane, tetrachlorogermane, trichlorogermane, methyl trichlorogermane, ethyl trichlorogermane, phenyl trichlorogermane, dichlorogermane, dimethyl dichlorogermane, diethyl dichlorogermane, diphenyl dichlorogermane, monochlorogermane, trimetyl chlorogermane, triethyl chlorogermane, tri-normal butyl chlorogermane, tetrachlorotin, methyl trichlorotin, normal butyl trichlorotin, dimethyl dichlorotin, di-normal butyl dichlorotin, diisobutyl dichlorotin, diphenyl dichlorotin, divinyl dichlorotin, methyl trichlorotin, phenyl trichlorotin, dichlorolead, methyl chlorolead, phenyl chlorolead, and the like, and compounds wherein the chloro parts in these compound names are replaced by fluoro, bromo, or iodo can be also exemplified.

As the halogenated compound (b), tetrachlorotitanium, methyl dichloroaluminum, ethyl dichloroaluminum, tetrachlorosilane, phenyl trichlorosilane, methyl trichlorosilane, ethyl trichlorosilane, normal propyl trichlorosilane, and tetrachlorotin are particularly preferable, from the viewpoint of polymerization activity.

Single halogenated compounds (b) among the above-mentioned compounds may be used, and two or more kinds thereof may be used simultaneously or subsequently.

(c) Phthalic Acid Derivative

The phthalic acid derivative (c) includes compounds represented by the following general formula:

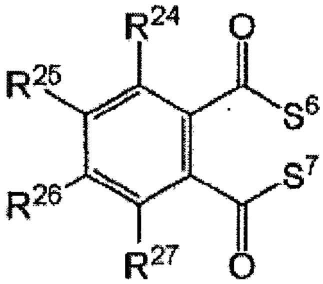

wherein $R^{24}$ to $R^{27}$ are each independently a hydrogen atom or a hydrocarbon group, $S^6$ and $S^7$ are each independently a halogen atom or a substituent formed by combining any atom selected from a hydrogen atom, a carbon atom, an oxygen atom and a halogen atom.

The groups $R^{24}$ to $R^{27}$ are preferably a hydrogen atom or a hydrocarbon group having 1 to 10 carbon atoms, and any combination of $R^{24}$ to $R^{27}$ may be taken together to form a ring. It is preferable that $S^6$ and $S^7$ are each independently a chlorine atom, a hydroxyl group, or an alkoxy group having 1 to 20 carbon atoms.

Examples thereof include phthalic acid, monoethyl phthalate, dimethyl phthalate, methylethyl phthalate, diethyl phthalate, di-normal propyl phthalate, diisopropyl phthalate, di-normal butyl phthalate, diisobutyl phthalate, dipentyl phthalate, di-normal hexyl phthalate, di-normal heptyl phthalate, diisoheptyl phthalate, di-normal octyl phthalate, di(2-ethylhexyl)phthalate, di-normal decyl phthalate, diisodecyl phthalate, dicyclohexyl phthalate, diphenyl phthalate, and phthaloyl dichloride. Of these, diethyl phthalate, di-normal butyl phthalate, diisobutyl phthalate, diisoheptyl phthalate, di (2-ethylhexyl)phthalate, and diisodecyl phthalate are preferable.

When the ester contained in the solid catalyst component is a phthalic acid dialkyl ester, it is a compound derived from a phthalic acid derivative, and is a compound of the general formula described above in which $S^1$ and $S^2$ are alkoxy groups. When the solid catalyst component is prepared, $S^1$ and $S^2$ in the phthalatic acid derivative (c) used may be as they are, or may be replaced by other substituents.

Production of Solid Catalyst Component (A)

The solid catalyst component (A) can be obtained by subjecting the solid component (a) which is obtained by reducing the titanium compound (ii) represented by the general formula [I] with the organic magnesium compound (iii) in the presence of the organic silicon compound (i) having a Si-O bond(s), the halogenated compound (b), and the phthalic acid derivative (c) to a contact treatment with each another. This contact treatment is usually performed always under an atmosphere of an inert gas such as nitrogen gas or argon gas.

Examples of the contact treatment for obtaining the solid catalyst component (A) are as follows:

- A method in which (b) and (c) are added to (a) (the addition order is arbitrary), and a contact treatment is performed.
- A method in which (a) and (c) are added to (b) (the addition order is arbitrary), and a contact treatment is performed.
- A method in which (a) and (b) are added to (c) (the addition order is arbitrary), and a contact treatment is performed.
- A method in which (b) is added to (a) and a contact treatment is performed, and then (c) is added and a contact treatment is performed.
- A method in which (c) is added to (a) and a contact treatment is performed, and then (b) is added and a contact treatment is performed.
- A method in which (c) is added to (a) and a contact treatment is performed, and then (b) and (c) are added (the addition order is arbitrary) and a contact treatment is performed.
- A method in which (c) is added to (a) and a contact treatment is performed, and a mixture of (b) and (c) is added and a contact treatment is performed.
- A method in which (b) and (c) are added to (a) (the addition order is arbitrary) and a contact treatment is performed, and the (b) is added and a contact treatment is performed.
- A method in which (b) and (c) are added to (a) (the addition order is arbitrary) and a contact treatment is performed, and then a mixture of (b) and (c) is added and a contact treatment is performed. Of these,
- a method in which (b2) and (c) are added to (a) (the addition order is arbitrary) and a contact treatment is performed, and then (b1) is added and a contact treatment is performed, and
- a method in which (b2) and (c) are added to (a) (the addition order is arbitrary) and a contact treatment is performed, and then a mixture of (b1) and (c) is added and a contact treatment is performed are more preferable. Also, further repeating a contact treatment with (b1) several times after the above-mentioned procedures may improve polymerization activity.

The contact treatment can be performed in any conventional method capable of bringing the one component into contact with the other component, for example, mechanical pulverization means such as a slurry method or a ball mill method. When the mechanical pulverization is performed, however, a lot of fine powder is generated in the solid catalyst component, and the particle size distribution sometimes becomes wider, and therefore, this is not preferable from the viewpoint of stable performance of continuous polymerization. It is preferable therefore that the both components are brought into contact in the presence of a solvent.

After the completion of the contact treatment, the mixture can be subjected to a next operation as it is, but it is preferable to perform a washing treatment with a solvent for removing surpluses.

The solvent is preferably inert to the treated subject components, and specifically aliphatic hydrocarbons such as pentane, hexane, heptane and octane; aromatic hydrocarbons such as benzene, toluene and xylene; alicyclic hydrocarbons such as cyclohexane and cyclopentane; and halogenated hydrocarbons such as 1,2-dichloroethane and monochlorobenzene can be used.

In the contact treatment, an amount of a solvent used is usually from 0.1 milliliter to 1000 milliliters per g of the solid component (a) in one stage of the contact treatment. The amount is preferable from 1 milliliter to 100 milliliters per g. Also, an amount of a solvent used in one washing treatment is almost the same as above. The number of washing operations in the washing treatment is usually from one to five times per stage of the contact treatment.

Temperatures in the contact treatment and/or the washing treatment are usually from -50 to 150°C, preferably from 0 to 140°C, and more preferably from 60 to 135°C.

A contact treatment time is not particularly limited, and it is preferably from 0.5 to 8 hours, and more preferably from 1 to 6 hours. A washing operation time is not particularly limited, and it is preferably from 1 to 120 minutes, more preferably from 2 to 60 minutes.

An amount of the phthalic acid derivative (c) used is usually from 0.01 to 100 millimoles, per g of the solid component (a), preferably from 0.05 to 50 millimoles, more preferably from 0.1 to 20 millimoles.

When the amount of the phthalic acid derivative (c) used is too excessive, the particle size distribution of the solid catalyst component (A) sometimes becomes wider due to particle disruptions.

In particular, it is possible to suitably adjust an amount of the phthalic acid derivative (c) used so that the content of the phthalic ester in the solid catalyst component (A) becomes appropriate. The amount is usually from 0.1 to 100 millimoles, per g of the solid component (a), preferably from 0.3 to 50 millimoles, and more preferably from 0.5 to 20 millimoles. Also, an amount of the phthalic acid derivative (c) used is usually from 0.01 to 1.0 mole, per mole of magnesium atoms in the solid component (a), more preferably from 0.03 to 0.5 mole.

An amount of the halogenated compound (b) used is usually from 0.5 to 1000 millimoles, per g of the solid component (a), preferably from 1 to 200 millimoles, and more preferably from 2 to 100 millimoles.

When the contact treatment is performed multiple times using each of the compounds, the above-mentioned amount of each compound used is the amount used in one time and of the one kind of the compound.

The resulting solid catalyst component (A) may be used in a polymerization in a state of a slurry in combination with an inert solvent or in a polymerization, or in a state of a flowable powder obtained by drying. The drying method includes a method in which volatile components are removed under reduced pressure, a method in which volatile components are removed in a stream of an inert gas such as nitrogen gas or argon gas. A temperature at drying is preferably from 0 to 200°C, and more preferably from 50 to 100°C. A time for drying is preferably from 0.01 to 20 hours, and more preferably from 0.5 to 10 hours.

It is preferable that the obtained solid catalyst component (A) has a weight average particle size of 1 to 100 μm, from the industrial point.

The solid catalyst component (A) is brought into contact with the organic aluminum compound (B) to give a polymerization catalyst. It is also possible to add and contact with an electron-donative compound (C), if necessary.

(B) Organic Aluminum Compound

An organic aluminum compound (B) used for forming the α-olefin polymerization catalyst of the present invention has at least one aluminum-carbon bond in its molecule. Representative compounds are shown by the following general formulas:

$$R^{19}{}_{w}AlY_{3-W}$$

$$R^{20}R^{21}Al\text{-}O\text{-}AlR^{22}R^{23}$$

wherein $R^{19}$ to $R^{23}$ are hydrocarbon groups having 1 to 20 carbon atoms, Y is a halogen atom, a hydrogen atom or an

alkoxy group, and w is a number satisfying 2≤w≤3.

Examples of the organic aluminum compound (B) include trialkyl aluminums such as triethyl aluminum, tirisobutyl aluminum and trihexyl aluminum; dialkyl aluminum hydrides such as diethyl aluminum hydride and diisobutyl aluminum hydride; dialkyl aluminum halides such as diethyl aluminum chloride; mixtures of a trialkyl aluminum and a dialkyl aluminum halide such as a mixture of triethyl aluminum and diethyl aluminum chloride; and alkyl alumoxanes such as tetraethyl dialumoxane and tetrabutyl dialumoxane.

Of these organic aluminum compounds, trialkyl aluminums, mixtures of trialkyl aluminum and a dialkyl aluminum halide, and alkyl alumoxanes are preferable, and triethyl aluminum, triisobutyl aluminum, mixtures of triethyl aluminum and diethyl aluminum chloride, and tetraethyl dialumoxane are especially preferable.

(C) Electron Donative Compound

An electron donative compound (C) used for forming the olefin polymerization catalyst includes oxygen-containing compounds, nitrogen-containing compounds, phosphorus-containing compounds, and sulfur-containing compounds. Of these, oxygen-containing compounds and nitrogen-containing compounds are preferable.

The oxygen-containing compounds include alkoxysilicons, ethers, esters, ketones, and the like. Of these, alkoxysilicons and ethers are preferable.

As the alkoxysilicons, alkoxysilicon compounds represented by the general formula: $R^3_rSi(OR^4)_{4-r}$ wherein $R^3$ is a hydrocarbon group having 1 to 20 carbon atoms, a hydrogen atom or a heteroatom-containing substituent group, $R^4$ is a hydrocarbon group having 1 to 20 carbon atoms, r is a number satisfying 0≤r<4, and when there are multiple $R^3$ and $R^4$, $R^3$s and $R^4$s are each the same or different, are used. When $R^3$ is a hydrocarbon group, it includes linear alkyl groups such as methyl group, ethyl group, propyl group, butyl group and pentyl group; branched alkyl groups such as isopropyl group, sec-butyl group, tert-butyl group and tert-amyl group; cycloalkyl groups such as cyclopentyl group and cyclohexyl group; cycloalkenyl groups such as cyclopentenyl group; and aryl groups such as phenyl group and tolyl group, and the like. Of these, it is preferable that the alkoxysilicon compound has at least one $R^3$ wherein the carbon atom which directly bonds to the silicon atom in the alkoxysilicon compound is a secondary or tertiary carbon atom. When $R^3$ is a heteroatom-containing substituent group, a heteroatom includes an oxygen atom, a nitrogen atom, a sulfur atom, and a phosphorus atom. Specifically, it includes dimethyl amino group, methylethyl amino group, diethyl amino group, ethyl n-propyl amino group, di-n-propyl amino group, pyrrolyl group, pyridyl group, pyrrolidinyl group, piperidyl group, perhydroindolyl group, perhydroisoindolyl group, perhydroquinolyl group, perhydroisoquinolyl group, perhydrocarbazolyl group, perhydroacridinyl group, furyl group, pyranyl group, perhydrofuryl group, thienyl group, and the like. Of these, substituents in which the heteroatom is capable of being chemically bonded directly to the silicon atom in the alkoxysilicon compound are preferable.

Specific examples of the alkoxysilicon compound include diisopropyl dimethoxysilane, diisobutyldimethoxysilane, di-tert-butyl dimethoxysilane, tert-butylmethyldimethoxysilane, tert-butylethyldimethoxysilane, tert-butyl-n-propyldimethoxysilane, tert-butyl-n-butyldimethoxysilane, tert-amylmethyldimethoxysilane, tert-amylethyldimethoxysilane, tert-amyl-n-propyldimethoxysilane, tert-amyl-n-butyldimethoxysilane, isobutylisopropyldimethoxysilane, tert-butylisopropyldimethoxysilane, dicyclobutyldimethoxysilane, cyclobutylisopropyldimethoxysilane, cyclobutylisobutyldimethoxysilane, cyclobutyl-tert-butyldimethoxysilane, dicyclopentyldimethoxysilane, cyclopentylisopropyldimethoxysilane, cyclopentylisobutyldimethoxysilane, cyclopentyl-tert-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-tert-butyldimethoxysilane, cyclohexylcyclopentyldimethoxysilane, cyclohexylphenyldimethoxysilane, diphenyldimethoxysilane, phenylmethyldimethoxysilane, phenylisopropyldimethoxysilane, phenylisobutyldimethoxysilane, phenyl-tert-butyldimethoxysilane, phenylcyclopentyldimethoxysilane, diisopropyldiethoxysilane, diisobutyldiethoxysilane, di-tert-butyl diethoxysilane, tert-butylmethyldiethoxysilane, tert-butylethyldiethoxysilane, tert-butyl-n-propyldiethoxysilane, tert-butyl-n-butyldiethoxysilane, tert-amylmethyldiethoxysilane, tert-amylethyldiethoxysilane, tert-amyl-n-propyldiethoxysilane, tert-amyl-n-butyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, 2-norbornanemethyldimethoxysilane, bis(perhydroquinolino)dimethoxysilane, bis(perhydroisoquinolino)dimethoxysilane, (perhydroquinolino)(perhydroisoquinolino)dimethoxysilane, (perhydroquinolino)methyldimethoxysilane, (perhydroisoquinolino)methyldimethoxysilane, (perhydroquinolino)ethyldimethoxysilane, (perhydroisoquinolino)ethyldimethoxysilane, (perhydroquinolino)(n-propyl)dimethoxysilane, (perhydroquinolino)(n-propyl)dimethoxysilane, (perhydroquinolino)(tert-butyl)dimethoxysilane, (perhydroisoquinolino)(tert-butyl)dimethoxysilane, and diethylaminotriethoxysilane.

The ethers include cyclic ether compounds.

The cyclic ether compound refers to a heterocyclic compound having at least one -C-O-C- in its cycle.

Specific examples of the cyclic ether compound include etylene oxide, propylene oxide, trimethylene oxide, tetrahydrofuran, 2,5-dimethoxytetrahydrofuran, tetrahydropyran, hexamethyleneoxide, 1,3-dioxepane, 1,3-dioxane, 1,4-dioxane, 1,3-dioxolane, 2-methyl-1,3-dioxolane, 2,2-dimethyl-1,3-dioxolane, 4-methyl-1,3-dioxolane, 2,4-dimethyl-1,3-dioxolane, furan, 2,5-dimethylfuran, and s-trioxane. Of these, cyclic ether compounds having at least one -C-O-C-O-C-bond in its cycle system are preferable.

The nitrogen-containing compound includes 2,6-substituted piperidines such as 2,6-dimethyl piperidine and 2,2,6,6-tetramethyl piperidine; 2,5-substituted piperidines; substituted methylenediamines such as N,N,N',N'-tetramethyl methylenediamine and N,N,N',N'-tetraethyl methylenediamine; substituted imidazolidines such as 1,3-dibenzyl imidazolidine, and the like. Of these, 2,6-substituted piperidines are preferable.

The particularly preferable electron donative compounds (C) are cyclohexylmethyldimethoxysilane, cyclohexylethyldimethoxysilane, diisopropyldimethoxysilane, tert-butylethyldimethoxysilane, tert-butyl-n-propyldimethoxysilane, phenyltrimethoxysilane, diphenyldimethoxysilane, dicyclobutyldimethoxysilane, dicyclopentyldimethoxysilane, 1,3-dioxolane, 1,3-dioxane, 2,6-dimethyl piperidine, and 2,2,6,6-tetramethyl piperidine.

[Polymerization of Olefin]

In the production of the ultrahigh molecular weight ethylene-α-olefin copolymer powder of the present invention, an α-olefin refers to an α-olefin having 3 or more carbon atoms, and examples of the α-olefin include linear monoolefins such as propylene, butene-1, pentene-1, hexene-1, heptene-1, octene-1 and decene-1; branched monoolefins such as 3-methyl butene-1, 3-methyl pentene-1 and 4-methyl pentene-1; vinyl cyclohexane, and the like. These α-olefins may be used alone, or in a combination of the two or more. In addition, a small amount of a compound having multiple unsaturated bonds such as conjugated diene or non-conjugated diene may be added during the copolymerization. The smaller the number of the carbon atoms in the α-olefin, the narrower the comonomer composition distribution of the ethylene-α-olefin copolymer, and therefore, the DSC melting point sometimes can be made lower, but a high molecular weight cannot be obtained, or transparency and strength can be inferior. Preferable α-olefins are propylene and butene-1, and butene-1 is more preferable.

As the ultrahigh molecular weight ethylene-α-olefin copolymer powder of the present invention, an ethylene-propylene copolymer, an etylene-butene-1 copolymer, an ethylene-hexene-1 copolymer, an ethylene-propylene-butene-1 copolymer, and an ethylene-propylene-hexene-1 copolymer are preferable, and an ethylene-propylene copolymer and an ethylene-butene-1 copolymer are more preferable, and an ethylene-butene-1 copolymer is further more preferable.

The catalyst using the solid catalyst component obtained according to the present invention refers to the polymerization catalyst obtained by bringing the solid catalyst component (A), the organic aluminum compound (B) and, if necessary, the electron donative compound (C) into contact. The term contact herein refers to a contact by any means so long as the catalyst components (A) and (B) (and, if necessary, (C)) are brought into contact to form a catalyst, and a method in which the components, which are previously diluted with a solvent or are not diluted, are brought into contact, or a method in which the components are separately added to a polymerization tank, and they are brought into contact in the tank can be adopted.

As a method of supplying each of the catalyst components in a polymerization tank, it is preferable to add the components in an atmosphere of an inert gas such as nitrogen or argon without moisture. The catalyst components may be added after the two components thereof have been previously contacted with each other.

Although the olefin can be polymerized in the presence of the above-mentioned catalyst, pre-polymerization described below may be performed before such a polymerization (main polymerization) is performed.

The pre-polymerization is usually performed by adding a small amount of the olefin in the presence of the solid catalyst component (A) and the organic aluminum compound (B), and it is preferably performed in a state of a slurry. A solvent used for making the slurry may include inert hydrocarbons such as propane, butane, isobutane, pentane, isopentane, hexane, heptane, octane, cyclohexane, benzene and toluene. Also, when the slurry is obtained, a liquid olefin can be used instead of a part or all of the inert hydrocarbon solvent.

An amount of the organic aluminum compound used in pre-polymerization can be selected from a wide range of usually 0.5 to 700 moles per mole of titanium atoms in the solid catalyst component, and it is preferably from 0.8 to 500 moles, particularly preferably from 1 to 200 moles. An amount of the olefin to be pre-polymerized is usually from 0.01 to 1000 g per g of the solid catalyst component, preferably from 0.05 to 500 g, and particularly preferably from 0.1 to 200 g.

A concentration of the slurry when the pre-polymerization is performed is preferably from 1 to 500 g of the solid catalyst component/liter of the solvent, particularly preferably from 3 to 300 g of the solid catalyst component/liter of the solvent. The pre-polymerization temperature is preferably -20 to 100°C, particularly preferably 0 to 80°C. A partial pressure of the olefin in the gaseous phase during the pre-polymerization is preferably from 1 kPa to 2 MPa, and particularly preferably from 10 kPa to 1 MPa, but not for liquid olefins under the pressure and the temperature of the pre-polymerization. In addition, a time of the pre-polymerization is not particularly limited, and it is usually preferably from 2 minutes to 15 hours.

When the pre-polymerization is performed, as a method for adding the solid catalyst component (A), the organic

aluminum compound (B), and the olefin, any method can be performed such as a method in which the solid catalyst component (A) is brought into contact with the organic aluminum compound (B), and then the olefin is supplied, and a method in which the solid catalyst component (A) is contacted with the olefin, and then the organic aluminum compound (B) is added. Also, as a method of supplying the olefin, any method may be used such as a method in which the olefin is continuously supplied while the inside pressure of a polymerization tank is kept at a predetermined value and a method a predetermined amount of the olefin is added at once at the beginning. It is possible to add a chain transfer agent such as hydrogen, in order to adjust a molecular weight of the obtained polymer.

Furthermore, when the solid catalyst component (A) is pre-polymerized with a small amount of the olefin in the presence of the organic aluminum compound (B), the electron donative compound (C) may be added, if necessary.

The electron donative compound used is a part or all of the above-mentioned electron donative compound (C). The amount is usually from 0.01 to 400 moles, per mole of titanium atoms contained in the solid catalyst component (A), preferably from 0.02 to 200 moles, particularly oreferably from 0.03 to 100 moles, and is usually from 0.003 to 5 moles based on the organic aluminum compound (B), preferably from 0.005 to 3 moles, and particularly preferably from 0.01 to 2 moles.

A method for adding the electron donative compound (C) upon the pre-polymerization is not particularly limited, and the electron donative compound and the organic aluminum compound (A) may be added separately, or they may be added following a previous contact. The olefin used in the pre-polymerization is selected from ethylene and α-olefins having 3 to 10 carbon atoms, which are used in the main polymerization, and it may be one kind or multiple kinds thereof.

After the pre-polymerization is performed as described above, or without the pre-polymerization, ethylene-α-olefin copolymerization can be performed in the presence of the polymerization catalyst comprising the solid catalyst component (A) and the organic aluminum compound (B).

An amount of the organic aluminum compound used in the main polymerization can be selected from a wide range of usually 1 to 1000 moles per mole of the titanium atoms in the solid catalyst component (A), and the amount is particularly preferably a range of 5 to 600 moles.

When the electron donative compound (C) is used in the main polymerization, its amount is usually from 0.1 to 2000 moles per mole of the titanium atoms contained in the solid catalyst component (A), preferably from 0.3 to 1000 moles, particularly preferably from 0.5 to 800 moles, and is usually from 0.001 to 5 moles based on the organic aluminum compound, preferably from 0.005 to 3 moles, and particularly preferably from 0.01 to 1 mole.

The main polymerization can be performed usually at -30 to 300°C, but the temperature is preferably from 20 to 180°C, more preferably from 40 to 100°C, and further more preferably from 50 to 80°C. When the polymerization temperature is too high, the molecular weight of the polymer becomes low and the bulk density of the powder can easily decrease. When the polymerization temperature is too low, the productivity per catalyst is remarkably lowered. A polymerization pressure is not particularly limited, and a pressure of usually ambient pressure to about 10 MPa, preferably about 200 kPa to 5 MPa is adopted, from the industrial and economic viewpoints. As a polymerization type, either a batch type or a continuous type can be employed, and it is possible to impart various distributions (molecular weight distribution, comonomer composition distribution, and the like) continuously through multiple polymerization stages or reactors having different polymerization conditions. In addition, slurry polymerization using an inert hydrocarbon solvent such as propane, butane, isobutane, pentane, hexane, heptane and octane, bulk polymerization in which a liquid olefin is used as a medium at a polymerization temperature, or gaseous polymerization can be employed.

In the main polymerization, it is possible to add a small amount of a chain transfer agent such as hydrogen or organic zinc, in order to adjust the molecular weight (intrinsic viscosity) of the polymer.

After the polymerization, polymerization can be stopped by adding a polymerization terminator such as alcohols, water, oxygen, carbon monooxide or carbon dioxide, removing the monomers, or stopping the addition of the monomers.

In the slurry polymerization, the inert hydrocarbon solvent used may be removed from the slurry by evaporation, and the solvent may be separated from the powder by filtration. When the solvent is filtered off from the powder, the components of the polymer and the catalyst residues that are dissolved in the solvent are fractionated, and therefore, the flowability of the powder and properties of the polymer sometimes may be improved.

In order to obtain powder having excellent flowability, it is preferable that the powder has a small amount of volatile components, and therefore, a drying treatment of the powder may be performed, if necessary.

The present invention will be explained in more detailed by means of Examples and Comparative Examples below, but the present invention is not particularly limited thereto. In Examples, methods for evaluating various physical properties of polymerization catalysts and polymers are as follows:

(1) A composition analysis about each of solid samples such as solid catalyst components were performed as described below. That is, a content of titanium atoms was obtained by decomposing about 20 milligrams of a solid sample with 47 milliliters of 0.5 mole/liter sulfuric acid, adding an excessive amount, 3 milliliters of 3% by weight aqueous hydrogen peroxide thereto, measuring a characteristic absorption of the resulting liquid sample at 410 nm using a double beam spectrophotometer U-2001 manufactured by Hitachi, Ltd., and obtaining a value from a standard

curve, which was separately made. A content of the alkoxy group was obtained by decomposing about 2 grams of a solid sample with 100 milliliters of water, obtaining an amount of alcohol corresponding to the alkoxy group in the resulting liquid sample using a gas chromatography internal standard method, and converting it to a content of the alkoxy group. A content of a phthalic ester compound was obtained by dissolving about 30 milligrams of a solid sample in 100 milliliters of N,N-dimethyl acetoamide, and obtaining an amount of the phthalic ester compound in the solution using a gas chromatography internal standard method.

(2) BET Specific Surface Area: A specific surface area of a solid catalyst component was obtained using FlowSorb II2300 manufactured by Micromeritics Instrument Corporation in a BET method according to nitrogen adsorption and desorption amounts.

(3) Apparent Bulk Density of Powder: It was measured in accordance with JIS K-6721 (1966).

(4) Flow-Down Rate of Powder: A funnel with a damper used for measuring an apparent bulk density of powder, stated in JIS K-6721 (1966), was charged with powder, and an outlet hole at a bottom part thereof was opened. A weight of the powder flowing down per unit time in a state where the powder flowed down constantly was expressed as the flow-down rate. The measurement was performed three times, and the result was an average value thereof. When the flowability of powder was poor, and the difference between the measured values was ±10% or more, or the powder choked and did not flow down, the result was expressed as not measurable.

(5) Production of Press Sheet: The resulting polymer powder was sandwiched with Lumirror film T60 (manufactured by Toray Industries, Inc.), and then with steel flat plates, which was pre-heated using a heat press at 190°C for 5 minutes. It was pressed for 5 minutes under a pressure sufficient for fusing the polymer particles, and then was cooled using a press for cooling at 25°C. The obtained pressed sheet was divided into four, which were stacked and were further heat-pressed in the same manner as above. The sheet was subjected to measurements, as required. In this case, the desired thickness of the press sheet was adjusted using a steel spacer.

(6) Intrinsic Viscosity (hereinafter abbreviated as [η]): The polymer was dissolved in a tetralin solvent, and it was measured at 135°C using an Ubbelohde viscometer.

(7) DSC Melting Point: A differential scanning calorimeter (Diamond DSC manufactured by PerkinElmer Co., Ltd.) was used. A test piece was kept at 150°C for 5 minutes in a measurement pan, the temperature was dropped from 150°C to 20°C at a rate of 5°C/minute, the piece was kept at 20°C for 2 minutes, and the temperature was raised from 20°C to 150°C at a rate of 5°C/minute. A peak of a fusion curve obtained during the operation was defined as a DSC melting point.

(8) Powder Particle Size Distribution: A particle size distribution in terms of volume was measured using a laser diffraction particle size distribution measuring apparatus (HELOS & RODOS system manufactured by SYMPATEC GmbH), and particle sizes, d10, d50 and d90, which were particle sizes at accumulated volumes of 10%, 50% and 90% of the total volume from the smallest particle size side, were obtained. A median diameter is d50. As a particle size distribution index, SPAN was expressed as (d90 - d10)/d50.

(9) Cold Xylene Soluble Part at 25°C (hereinafter abbreviated as CXS): After 5 g of a polymer was dissolved in 1000 milliliter of boiled xylene, it was allowed to air-cool and allowed to stand in a thermostatic chamber at 25°C for 20 hours, and then, the polymer deposited at that temperature was filtered off through a filter paper (No. 50 manufactured by Advantech Co., Ltd.). Xylene in a filtrate was distilled away under reduced pressure, and a percent by weight of a remaining polymer was found, which was defined as CXS (unit = % by weight).

(10) A content of α-olefin was obtained from characteristic absorptions of ethylene and α-olefin by using an infrared spectrophotometer (1600 series manufactured by PerkinElmer Co., Ltd.), using an calibration curve, and it was expressed as the number of short chain branchings per 1000 C (SCB).

(11) Density of Polymer: It was measured in accordance with a water replacement method described in JIS K 7112-1980 without performing an annealing treatment.

[Example 1]

(1) Synthesis of Solid Catalyst Component Precursor

Air in a 500 ml-cylindrical reactor provided with a stirrer and baffle plates (a reactor having a diameter of 0.07 m, provided with three pairs of a stirring blade with a diameter of 0.053 m and a width of 0.010 m, and four baffle plates with a width of 0.007 m, a power number: 3.02) shown in Fig. 1 was replaced by nitrogen, and 270 ml of hexane, 8.1 ml of tetrabutoxytitanium, and 79.9 ml of tetraethoxysilane were added thereto and stirred. Then, 182 ml of a solution of butyl magnesium chloride in dibutyl ether (a concentration: 2.1 moles/liter) was added dropwise to the stirred mixture over 4 hours, while the reactor temperature was kept at 5°C, wherein the number of rotations in stirring was 700 rpm. After the dropping was finished, the mixture was stirred at 20°C for 1 hour, and then filtered. The resulting solid was washed with 280 ml of toluene three times, to which toluene was added so that the total volume was 250 ml to form into a slurry. A part of the slurry was sampled, and the solvent was removed therefrom and dried to give a solid catalyst

component precursor.

The solid catalyst component precursor had 1.9% by weight of Ti, 34.3% by weight of OEts (ethoxy groups), and 2.9% by weight of OBus (butoxy groups).

(2) Synthesis of Solid Catalyst Component

Air in a flask having an internal volume of 100 ml, provided with a stirrer, was replaced by nitrogen, and the flask was charged with a slurry comprising 7.0 g of the solid catalyst component precursor obtained in the above described (1), to which toluene was added so that the total volume was 40.6 ml. Phenyl trichlorosilane, 5.1 ml was added thereto at room temperature, followed by adding 5.4 ml of di(2-ethylhexyl) phthalate, and the mixture was stirred at 105°C for 2 hours. The stirred mixture was subjected to solid-liquid separation, and the resulting solid was washed with 35 ml of toluene at 105°C three times. Toluene was added thereto so that the total volume was 40.6 ml again. After the temperature was raised to 70°C, to which 3.5 ml of tetrachlorotitanium was added, and the mixture was stirred at 105°C for 2 hours. Then, the solid-liquid was separated, and the resulting solid was washed with 35 ml of toluene at 105°C six times and then with 35ml of hexane at room temperature two times. After washing, the solid was dried under reduced pressure to give a solid catalyst component.

The solid catalyst component had 0.92% by weight of Ti, and 28.9% by weight of di(2-ethylhexyl) phthalate.

(3) Ethylene-Butene Slurry Polymerization

An autoclave having an internal volume of 3 liters, provided with a stirrer was thoroughly dried and evacuated, which was charged with 130 g of 1-butene and 620 g of butane, and the temperature was raised to 70°C. Then, ethylene was added so that the partial pressure was 0.6 MPa. Polymerization was initiated by injecting 5.7 mmol of triethyl aluminum and 19.6 mg of the solid catalyst component obtained in (2) above with argon. After that, ethylene was continuously added while the total pressure was kept constant, whereby the polymerization was performed at 70°C for 180 minutes.

After the polymerization reaction was finished, 5 ml of ethanol was added to purge unreacted monomers to give 220 g of a polymer having good powder properties. Almost no polymer was adhered to the inner wall of the autoclave and the stirrer.

An amount of the polymer produced per unit amount (polymerization activity) of the catalyst was 11200 g of the polymer/g of the solid catalyst component. The various values of the physical properties of the obtained polymer are shown in Table 1 and Table 2.

[Example 2]

(1) Synthesis of Solid Catalyst Component Precursor

Air in a 500 ml cylindrical reactor provided with a stirrer and baffle plates, which was the same as used in Example 1 (1), was replaced by nitrogen, to which 270 ml of hexane, 16.8 ml of tetrabutoxytitanium, 75.5 ml of tetraethoxysilane and 6.0 ml of diisobutyl phthalate were added, and the mixture was stirred. Then, 182 ml of a solution of butyl magnesium chloride in dibutyl ether (a concentration: 2.1 moles/liter) was added dropwise to the stirred mixture over 4 hours, while the reactor temperature was kept at 45°C, wherein the number of rotations in stirring was 1000 rpm. After the dropping was finished, the mixture was stirred at 45°C for 1 hour, and then filtered. The resulting solid was washed with 280 ml of toluene three times. Toluene was added thereto so that the total volume was 250 ml to form into a slurry. A part of the slurry was sampled, and the solvent was removed therefrom and dried to give a solid catalyst component precursor.

The solid catalyst component precursor had 3.4% by weight of Ti, 36.4% by weight of OEts (ethoxy groups), and 5.6% by weight of OBus (butoxy groups).

(2) Synthesis of Solid Catalyst Component

A solid catalyst component was obtained in the same polymerization manner as in Example 1 (2) except that a slurry comprising 7.0 g of the solid catalyst component precursor obtained in the above described (1) was used.

The solid catalyst component had 0.80% by weight of Ti and 27.5% by weight of di(2-ethylhexyl) phthalate.

(3) Ethylene-Butene Slurry Polymerization

A polymer was obtained in an amount of 110 g in the same polymerization manner as in Example 1 (3), except

that 8.27 mg of the solid catalyst component obtained in (2) above was used.

An amount of the polymer produced per unit amount (polymerization activity) of the catalyst was 13300 g of the polymer/g of the solid catalyst component. The various values of the physical properties of the obtained polymer are shown in Table 1 and Table 2.

[Example 3]

(1) Ethylene-Butene Slurry Polymerization

A polymer was obtained in an amount of 156 g in the same polymerization manner as in Example 1 (3) except that 200 g of 1-butene and 550 g of butane were charged instead of 130 g of 1-butene and 620 g of butane, 20.8 mg of the solid catalyst component obtained in Example 2 (2) was added, and the polymerization temperature was 60°C.

An amount of the polymer produced (polymerization activity) per unit amount of the catalyst was 7500 g of the polymer/g of the solid catalyst component. The various values of the physical properties of the obtained polymer are shown in Table 1 and Table 2.

[Example 4]

(1) Ethylene-Propylene Slurry Polymerization

A polymer was obtained in an amount of 156 g in the same polymerization manner as in Example 1 (3) except that 200 g of 1-butene and 550 g of butane were charged instead of 100 g of propylene and 650 g of butane, 10.6 mg of the solid catalyst component obtained in Example 2 (2), and the polymerization temperature was 60°C.

An amount of the polymer produced (polymerization activity) per unit amount of the catalyst was 14700 g of the polymer/g of the solid catalyst component. The various values of the physical properties of the obtained polymer are shown in Table 1 and Table 2.

[Example 5]

(1) Synthesis of Solid Catalyst Component Precursor

A solid catalyst component precursor was obtained in the same manner as in Example 1 (1) except that a reactor temperature was 30°C at the time when the solution of butyl magnesium chloride in dibutyl ether was added dropwise.

The solid catalyst component precursor had 3.5% by weight of Ti, 35.6% by weight of OEts (ethoxy groups), and 5.7% by weight of OBus (butoxy groups).

(2) Synthesis of Solid Catalyst Component

After air in a flask having an internal volume of 100 ml, provided with a stirrer, was replaced by nitrogen, a slurry comprising 7.0 g of the solid catalyst component precursor obtained in the above described (1) was charged in the flask, and the solid-liquid was separated. The resulting solid was washed with 25 ml of decane at room temperature three times, and decane was added thereto so that the total volume was 40.6 ml. After 5.1 ml of phenyltrichlorosilane was added at room temperature, 5.4 ml of di(2-ethylhexyl) phthalate was subsequently added thereto, and the mixture was stirred at 105°C for 2 hours. The stirred mixture was subjected to solid-liquid separation, the obtained solid was washed with 35 ml of toluene at 105°C three times, and toluene was added so that the total volume was 40.6 ml, again. After the temperature was raised to 70°C, 3.5 ml of tetrachlorotitanium was added thereto, and the mixture was stirred at 105°C for 2 hours. Then, the solid-liquid was separated, and the resulting solid was washed with 35 ml of toluene at 105°C six times and then with 35 ml of hexane at room temperature two times. After washing, the solid was dried under reduced pressure to give a solid catalyst component.

The solid catalyst component had 1.4% by weight of Ti and 30.2% by weight of di(2-ethylhexyl) phthalate.

(3) Ethylene-Butene Slurry Polymerization

A polymer was obtained in an amount of 289 g in the same polymerization manner as in Example 1 (3) except that 7.43 mg of the solid catalyst component obtained in (2) above was added.

An amount of the polymer produced per unit amount (polymerization activity) of the catalyst was 38900 g of the polymer/g of the solid catalyst component. The various values of the physical properties of the obtained polymer are

shown in Table 1 and Table 2.

[Comparative Example 1]

(1) Synthesis of Solid Catalyst Component Precursor

A solid catalyst component precursor was obtained in the same manner as in Example 1 (1) except that the number of rotations in stirring when the solution of butyl magnesium chloride in dibutyl ether was added dropwise, was 300 rpm, and the dropping time was 1 hour.

The solid catalyst component precursor had 2.1% by weight of Ti, 38.9% by weight of OEts (ethoxy groups), and 4.4% by weight of OBus (butoxy groups).

(2) Synthesis of Solid Catalyst Component

A solid catalyst component was obtained in the same synthetic manner as in Example 1 (2) except that a slurry including 7.0 g of the solid catalyst component precursor obtained the above described (1) was used.

The solid catalyst component had 0.92% by weight of Ti and 26.8% by weight of di(2-ethylhexyl) phthalate.

(3) Ethylene-Butene Slurry Polymerization

A polymer was obtained in an amount of 174 g in the same polymerization manner as in Example 1 (3) except that 10.2 mg of the solid catalyst component obtained in (2) above was added.

An amount of the polymer produced per unit amount (polymerization activity) of the catalyst was 17100 g of the polymer/g of the solid catalyst component. The various values of the physical properties of the obtained polymers are shown in Table 1 and Table 2.

[Comparative Example 2]

(1) Synthesis of Solid Catalyst Component

A solid catalyst component was obtained in the same synthetic manner as in Example 5 (2) except that a slurry comprising 7.0 g of the solid catalyst component precursor obtained in Comparative Example 1 (1) was used.

The solid catalyst component had 0.92% by weight of Ti and 26.8% by weight of di(2-ethylhexyl) phthalate.

(3) Ethylene-Butene Slurry Polymerization

A polymer was obtained in an amount of 176 g in the same polymerization manner as in Example 1 (3) except that 5.54 mg of the solid catalyst component obtained in (2) above was added.

An amount of the polymer produced per unit amount (polymerization activity) of the catalyst was 31800 g of the polymer/g of the solid catalyst component. The various values of the physical properties of the obtained polymers are shown in Table 1 and Table 2.

Table 1

| | [η] (dl/g) | SCB ($CH_3$/1000C) | CXS (% by weight) | DSC melting point (°C) | Density (g/ $cm^3$) |
|---|---|---|---|---|---|
| Example 1 | 6.0 | 11.7 | 2.9 | 119.2 | 0.908 |
| Example 2 | 8.3 | 16.3 | 0.7 | 119.6 | 0.903 |
| Example 3 | >15 | 8.2 | 1.1 | 119.7 | 0.911 |
| Example 4 | 6.6 | 23.9 | 4.9 | 117.5 | - |
| Example 5 | 7.8 | 4.6 | 1.3 | 119.9 | - |
| Comparative Example 1 | 7.1 | 10.2 | 3.5 | 120.2 | - |
| Comparative Example 2 | 6.1 | 13.3 | 4.0 | 117.8 | - |

Table 2

| | Stirringe efficiency ($m^2/S^3$) | Bulk density (g/ $cm^3$) | d50 (μm) | d10 (μm) | d90 (μm) | SPAN | Flow-down rate (g/10 seconds) |
|---|---|---|---|---|---|---|---|
| Example 1 | 5.6 | 0.39 | 818 | 596 | 1088 | 0.60 | 25.2 |
| Example 2 | 16 | 0.41 | 205 | 139 | 292 | 0.75 | 39.7 |
| Example 3 | 16 | 0.39 | 179 | 124 | 253 | 0.72 | 37.6 |
| Example 4 | 16 | 0.41 | 234 | 160 | 349 | 0.81 | 36.8 |
| Example 5 | 16 | 0.42 | 447 | 279 | 721 | 0.99 | 35.4 |
| Comparative Example 1 | 0.44 | 0.37 | 988 | 451 | 1680 | 1.24 | 19.6 |
| Comparative Example 2 | 0.44 | 0.40 | 1346 | 760 | 2451 | 1.26 | not measurable |

## Claims

**1.** An ultrahigh molecular weight ethylene-α-olefin copolymer powder having an intrinsic viscosity of 5 dl/g or more, a DSC melting point of 122°C or less, an apparent bulk density of 0.30 g/$cm^3$ or more, and a flow-down rate of 20 g/ 10 seconds or more.

**2.** An ultrahigh molecular weight ethylene-α-olefin copolymer powder having an intrinsic viscosity of 5 dl/g or more, a DSC melting point of 122°C or less, a median diameter of 1 to 3000 μm, and a particle size distribution parameter (SPAN) of 3 or less.

**3.** The ultrahigh molecular weight ethylene-α-olefin copolymer powder according to claim 1 or 2, which has a degree of short chain branching (SCB) of 25 or less.

Fig. 1

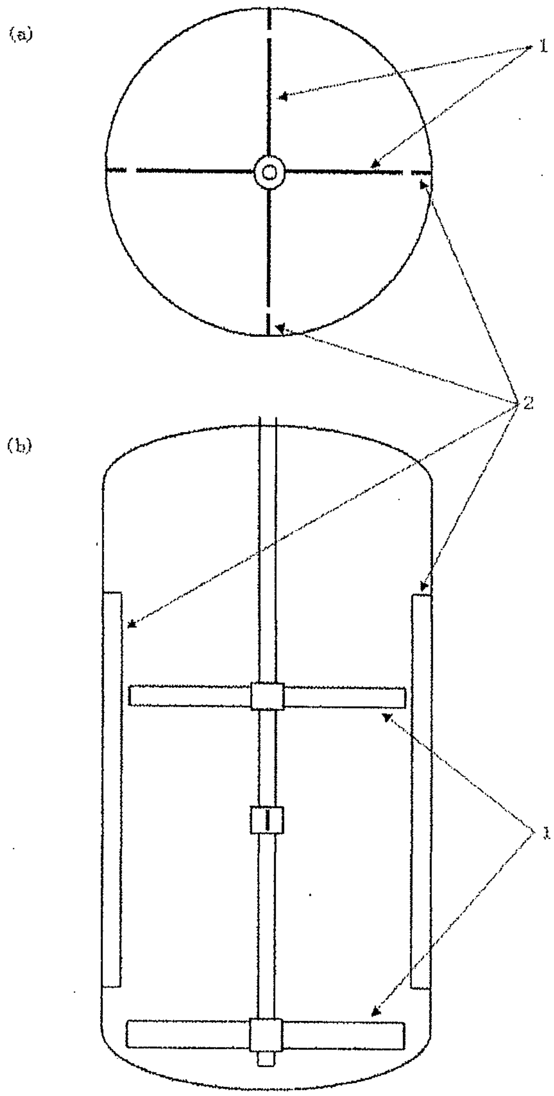

**INTERNATIONAL SEARCH REPORT**

International application No. PCT/JP2008/056503

A. CLASSIFICATION OF SUBJECT MATTER
*C08F210/16*(2006.01)i, *C08F4/658*(2006.01)n

According to International Patent Classification (IPC) or to both national classification and IPC

B. FIELDS SEARCHED

Minimum documentation searched (classification system followed by classification symbols)
C08F210/00-210/18, C08F4/60-4/70

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-274160 A (Sumitomo Chemical Co., Ltd.), 12 October, 2006 (12.10.06), Claims; examples (Family: none) | 1,3 |
| Y | JP 5-230146 A (Idemitsu Petrochemical Co., Ltd.), 07 September, 1993 (07.09.93), Claims; examples & EP 557107 A2 & DE 69325115 T & KR 10-1996-0004671 B & CA 2089591 A1 | 1,3 |
| Y | JP 63-61008 A (Nippon Oil Co., Ltd.), 17 March, 1988 (17.03.88), Page 1, lower right column, lines 7 to 16 & US 4849390 A & EP 243190 A1 | 1,3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 June, 2008 (10.06.08) | 24 June, 2008 (24.06.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/056503

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-292773 A (Sumitomo Chemical Co., Ltd.), 21 October, 2004 (21.10.04), Claims; Par. No. [0028] (Family: none) | 1,3 |
| Y | JP 2004-182981 A (Sumitomo Chemical Co., Ltd.), 02 July, 2004 (02.07.04), Claims; Par. Nos. [0030], [0031] (Family: none) | 1,3 |
| Y | JP 7-316218 A (Hoechst AG.), 05 December, 1995 (05.12.95), Claims; Par. No. [0010]; examples & EP 683178 A1 & DE 4417475 A & ES 2122383 T & BR 9502078 A & CN 1116630 A | 1,3 |

Form PCT/ISA/210 (continuation of second sheet) (April 2007)

**INTERNATIONAL SEARCH REPORT**

International application No.
PCT/JP2008/056503

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

This application contains the following two inventions.
1. Claims 1, 3
2. Claim 2

The technical feature common to the above two groups of inventions is a super high molecular weight ethylene-α-olefin copolymer powder having a limiting viscosity of not less than 5 dl/g and a DSC melting point of not more than 122°C. This common feature, however, is not novel since it is disclosed in JP 2006-274160 A.

(Continued to extra sheet)

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1, 3

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**

International application No.
PCT/JP2008/056503

Continuation of Box No.III of continuation of first sheet(2)

Consequently, there is no technical relationship between the above two groups of inventions involving a same or corresponding special technical feature which defines a contribution over the prior art.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5086803 A
- JP 46034092 A
- JP 47041676 A
- JP 55023561 A
- JP 57024361 A
- JP 52039431 A
- JP 52036786 A
- JP 1028049 A
- JP 3043283 A
- JP 4080044 A
- JP 55052309 A
- JP 58021405 A
- JP 61181807 A
- JP 63142008 A
- JP 5339319 A
- JP 54148093 A
- JP 4227604 A
- JP 6002933 A
- JP 646006 A
- JP 6179720 A
- JP 7116252 A
- JP 8134124 A
- JP 9031119 A
- JP 11228628 A
- JP 11080234 A
- JP 11322833 A